Europäisches Patentamt

European Patent Office

Office européen des brevets

(19)

(11) Veröffentlichungsnummer: **0 054 843**
**B1**

(12)

# EUROPÄISCHE PATENTSCHRIFT

(45) Veröffentlichungstag der Patentschrift:
**11.09.85**

(51) Int. Cl.⁴: **F 28 C 1/12,** F 28 F 25/02

(21) Anmeldenummer: **81110291.2**

(22) Anmeldetag: **09.12.81**

(54) **Kühlturm zum Rückkühlen von Wasser.**

(30) Priorität: **18.12.80 DE 3047775**

(43) Veröffentlichungstag der Anmeldung:
**30.06.82 Patentblatt 82/26**

(45) Bekanntmachung des Hinweises auf die Patenterteilung:
**11.09.85 Patentblatt 85/37**

(84) Benannte Vertragsstaaten:
**AT BE CH DE FR GB IT LI LU NL SE**

(56) Entgegenhaltungen:
**CH - A - 308 094**
**CH - A - 555 523**
**DE - A - 2 636 807**
**DE - C - 140 727**
**DE - C - 370 136**
**FR - A - 2 266 134**
**FR - E - 24 300**
**GB - A - 841 089**

(73) Patentinhaber: **HAMON-SOBELCO S.A. Société dite:,**
**50-58, Rue Capouillet, B-1060 Bruxelles (BE)**

(72) Erfinder: **Pflaumbaum, Hans-Jürgen, Ing.-grad.,**
**Brunsbergweg 6a, D-5810 Witten-Heven (DE)**

(74) Vertreter: **Herrmann-Trentepohl, Werner, Dipl.-Ing. et al,**
**Schaeferstrasse 18, D-4690 Herne 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen Kühlturm zum Rückkühlen von Wasser nach dem Oberbegriff des Anspruches 1.

Ein Kühlturm der erfindungsgemäßen Gattung ist bereits bekannt (CH-A-308 094). Er wird u. a. für Dampfkraftanlagen verwendet. Hierbei wird das aus den Kondensatoren austretende und zum Niederschlagen des Abdampfes benutzte Wasser innerhalb des zumeist aus Beton bestehenden Kühlturmes nach oben gepumpt und auf im Kühlturm untergebrachte Einbauten verteilt, über die es nach unten regnet, während die von den Ventilatoren in den Turm gedrückte Luft von unten durchströmt, wobei das zu kühlende Wasser seine Wärme hauptsächlich durch Verdunsten einer Teilmenge an die Luft abgibt. Da bei Zwangsbelüftung die zumeist mehreren, radial angeordneten Ventilatoren die Außenluft ansaugen und in die innerhalb der Umrißlinie des Kühlturmes liegende Fläche drücken, sind die Temperaturbedingungen an den Ventilatoren unmittelbar von der Außentemperatur abhängig. Das führt im praktischen Betrieb zu erheblichen Schwierigkeiten, wenn niedrige, insbesondere im Minusbereich liegende Außenlufttemperaturen gemessen werden, weil dann die Laufzeuge der zumeist als Axiallüfter ausgeführten Ventilatoren vorzugsweise an den Flügeln und den Naben Eisansätze bilden. Die Dampfkraftanlage macht es bei derart niedrigen Außentemperaturen nämlich im allgemeinen erforderlich, einzelne oder alle Lüfter zur Einhaltung der vorgegebenen Kühlwassertemperatur abzuschalten. Andererseits müssen die Ventilatoren bei wieder ansteigenden Außentemperaturen erneut in Betrieb genommen werden. Sind aber die Ventilatoren vereist, so ist das nur mit großen Gefahren möglich, weil u. a. die Eisansätze bei laufendem Flügelrad abgeschleudert werden und die Umgebung des Lüfters gefährden.

In bekannter Weise werden solche Kühltürme so betrieben, daß man stets das zu kühlende Wasser auf die nutzbare Querschnittsfläche des Kühlturms verteilt, um eine optimale Regendichte in der ausströmenden Luft zu erhalten, so daß u. a. die für den Kühleffekt nötige Verdunstung gefördert wird. Diese Querschnittsfläche wird von der Umrißlinie eines Horizontalschnittes durch den Kühlturm auf einer Ebene umschlossen, welche unter den von einer Zuleitung ausgehenden Verteilerkanälen verläuft. Für den Fall von niedrigen Temperaturen in der Außenluft werden durch Ablenkbleche die Ventilatoren, die meistens unmittelbar oberhalb der Auftreffebene des aus dem gekühlten Wasser bestehenden Regens auf den Wasserspiegel des Kühlwasserbeckens im Kühlturm angeordnet sind, gegen Spritzwasser geschützt, damit die Laufzeuge nicht vereisen. Diese Ablenkbleche haben jedoch erfahrungsgemäß keinen oder nur einen begrenzten Erfolg. Darüber hinaus reicht auch ein wirksamer Spritzschutz allein nicht zur Vermeidung des Vereisens der Ventilatoren aus. Es hat sich nämlich herausgestellt, daß sich bei der Kühlung des Wassers im Kühlturm Schwaden bilden, welche teilweise infolge der besonderen Strömungsverhältnisse bei Axiallüftern auch an die Naben gelangen und Wasser auskondensieren lassen, das dort und an den Ventilatorflügeln zu Vereisungserscheinungen führt.

Es ist deshalb bereits versucht worden, das Vereisen zu verhindern bzw. Vereisungen schnell rückgängig zu machen. Dazu dient z. B. eine in den Laufring des jeweiligen Axiallüfters eingebaute Heizung. Solche vorzugsweise mit Dampf oder Strom betriebenen Heizungen sind indessen wenig wirksam, so daß es insbesondere Schwierigkeiten macht, bei plötzlichen Temperaturanstiegen vereiste Ventilatoren umgehend wieder in Betrieb zu nehmen.

Während die als bekannt vorausgesetzte Kühlturmbauart den Kühlturm mit den radial angeordneten Ventilatoren zwangsbelüftet und im übrigen nach dem Gegenstromprinzip arbeitet, ist bei einer anderen Kühlturmbauart vorgesehen, durch konzentrische Anordnung eines inneren zwangsbelüfteten Kühlturmquerschnittes und eines äußeren ringförmigen Naturzugteiles sowie Parallelschaltung beider Kühlturmquerschnitte die Vorteile dieser beiden Hauptbauarten von nach dem Gegenstromprinzip arbeitenden Kühltürmen zu verwirklichen (GB-A-841 089). Bei dieser vorbekannten Bauart läßt sich die Kühlleistung einerseits durch die Verteilung der insgesamt durchgesetzten Luft auf die beiden Teilquerschnitte und andererseits durch die Wasserverteilung auf den Naturzugquerschnitt und den Ventilatorquerschnitt regeln. Für Winterbetrieb ist deshalb vorgesehen, entweder nur den Naturzugquerschnitt oder nur den Ventilatorquerschnitt zu betreiben, indem in dem jeweils ausgewählten Querschnitt die durchgesetzte Luft und das zu kühlende Wasser insgesamt im Gegenstrom geführt werden.

Beschränkt man in dieser Weise den Gegenstrom auf den Naturzugquerschnitt des Kühlturmes, also auf dessen äußere Ringfläche, dann wird durch das stehende Laufzeug des Ventilators Spritzwasser nach oben abgesaugt, was einfach daran liegt, daß der Luftstrom im Naturzugteil als Injektor auf den Ventilatorteil wirkt. Führt man dagegen den Gegenstrom nur durch den zwangsbelüfteten Kühlturmquerschnitt und damit wiederum durch das Laufzeug, so werden die aus dem Diffusor des Ventilators im Kühlturm austretenden Schwaden über den Naturzugteil durch die Einbauten im Kühlturm in das Lüfterlaufrad zurückgeführt. Die in beiden Fällen durch das Laufzeug des Ventilators strömende Luft führt infolge der Kühlturmschwaden bzw. des mitgerissenen Spritzwassers im Winter daher auch bei dieser Kühlturmbauart zur Vereisung des Laufzeuges und zu den damit verbundenen Schwierigkeiten.

Die Erfindung geht von der Erkenntnis aus, daß das abregnende Wasser der in einem Kühl turm nach oben strömenden Luft einen größeren Widerstand als die Einbauten des Kühlturmes entgegensetzt, wenn diese von abregnendem Wasser freigehalten werden. Die Aufgabe der Erfindung besteht darin, diese Erscheinung zu nutzen und bei dem als bekannt vorausgesetzten Kühlturm damit auf einfache Weise durch Vermeiden des Einfrierens in allen Temperaturbereichen jederzeit ein Anfahren der Ventilatoren zu ermöglichen.

Gemäß der Erfindung wird diese Aufgabe durch die Merkmale des Anspruches 1 gelöst.

Bei dem erfindungsgemäßen Kühlturm wird bei absinkender Außentemperatur und damit verbundener Vereisungsgefahr das Kühlwasser derart geschaltet, daß um den der Vereisung ausgesetzten Ventilator eine Randfläche des Kühlturmes frei von herunterregnendem Wasser bleibt, so daß das Wasser den Ventilator nicht mehr erreichen kann. Über diese Randfläche ist im Kühlturm ein Raum vorhanden, der frei von abregnendem Kühlwasser ist und der daher gegenüber dem Kern des Kühlturmes einen geringeren Strömungswiderstand hat, so daß eine höhere Luftgeschwindigkeit als über der beregneten Fläche entsteht. Das führt dazu, daß die Schwaden beschleunigt und deswegen daran gehindert werden, in den Bereich des Lüfters einzudringen, um an den Flügel zu kondensieren und ihrerseits Vereisungen zu bilden.

Deswegen kann man die Randfläche, die durch eine entsprechende Abtrennung der außen liegenden Verteilerkanäle für das Kühlwasser gegeben ist, nach den jeweiligen Verhältnissen leicht so wählen, daß einerseits kein Spritzwasser und auch bei ungünstigen Wärmezuständen bzw. Betriebsweisen keine Schwaden in den Ventilatorbereich gelangen können und daß andererseits auch die Einflüsse von Luftrückströmungen, wie sie jedenfalls zum Teil durch Windeinflüsse zustande kommen können, kein Wasser und keine Schwaden in den Bereich des Flügels der Ventilatoren tragen.

Die Erfindung hat einerseits den Vorteil, daß die Ventilatoren ohne zusätzliche Einrichtungen auch im Minusbereich der Außentemperatur gefahren werden können. Denn in der Regel läßt sich trotz Verminderung der beregneten Fläche des Kühlturmes das anfallende Kühlwasser in der Restfläche unterbringen. Die Betriebssicherheit und die Verfügbarkeit der Kühlturmanlage werden dadurch bei allen Außentemperaturen gewährleistet. Darüber hinaus hat die Erfindung noch einen besonderen Vorteil. Die für die Eisfreihaltung der Ventilatoren im Kühlturm vorgesehene Schaltung der Kühlwasserverteilung kann man mit Nutzen auch mit anderweitiger Zielsetzung einsetzen. So ist es möglich, den bislang für geringere Kühlleistungen vorgesehenen By-pass-Betrieb des Kühlwassers am Kühlturm ganz oder teilweise durch Konzentration des Kühlwassers auf die kleinere Fläche im Kühlturmkern zu vermeiden, weil dort durch den Fortfall der beschriebenen Randflächen eine geringere Kühlleistung auftritt.

Vorzugsweise verwirklicht man den erfindungsgemäßen Kühlturm mit den Merkmalen des Anspruches 2.

Dann kann man die Umrißlinie der mit dem Kühlwasser beaufschlagten Teilfläche quadratisch bis rechteckig ausbilden, selbst wenn die Umrißlinie des lichten Kühlturmquerschnittes die übliche Kreisform besitzt. Dann allerdings ist es zweckmäßig, daß gemäß dem Merkmal des Anspruches 3 die kürzeste Entfernung der nicht wasserberührten Strecke zwischen zwei Ventilatoren angeordnet wird, um einen möglichst großen Abstand zu erhalten.

Besonders zweckmäßig ist das Merkmal des Anspruches 4 bei einer vermehrten Anzahl von Ventilatoren, weil die Form der mit dem Kühlwasser beaufschlagten Fläche im Kühlturm der Umrißlinie des Kreises am nächsten kommt.

Im folgenden wird die Erfindung anhand von beispielsweisen Kühltürmen weiter beschrieben. In den Zeichnungen zeigt

Fig. 1 schematisch und im abgebrochenen Horizontalschnitt eine erste Zellenkühlturmausführung gemäß der Erfindung,

Fig. 2 eine Zelle des Gegenstandes der Fig. 1 im Vertikalschnitt,

Fig. 3 eine Draufsicht auf einen Vollquerschnitt eines Kühlturmes gemäß der Erfindung,

Fig. 4 in der Fig. 3 entsprechender Darstellung eine abgeänderte Ausführungsform eines Kühlturmes,

Fig. 5 eine weiter abgeänderte Ausführungsform des Kühlturms in den Fig. 3 und 4 entsprechender Darstellung,

Fig. 6 die Ausführungsform des Kühlturms nach Fig. 3 nach Einbau einer weiteren Schaltungsmöglichkeit in den Fig. 3—5 entsprechender Darstellung und

Fig. 7 eine andere Ausführungsform der Erfindung in der Fig. 2 entsprechender Darstellung.

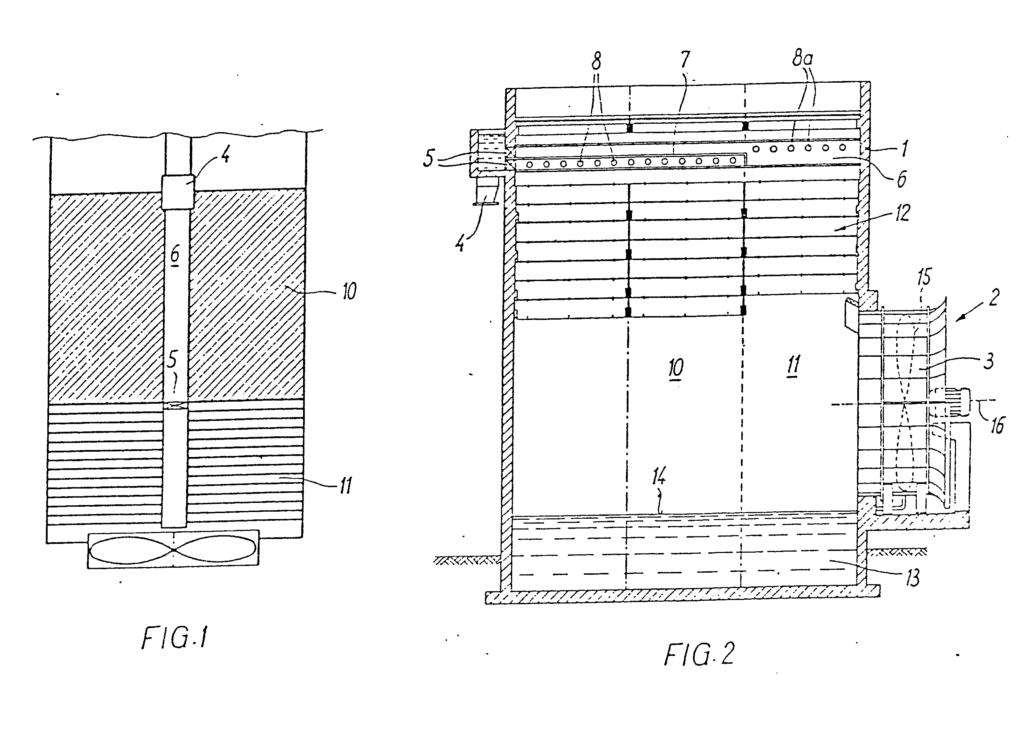

Nach den Fig. 1 und 2 handelt es sich um einen Zellenkühlturm mit einer Außenschale 1 aus Stahlbeton. Mehrere Axiallüfter 2 sind im unteren Teil des Kühlturmes 1 mit ihren Ventilatorgehäusen 3 so eingebaut, daß sie Außenluft ansaugen und in das Innere des Kühlturms drücken. Über Steigeschächte 4 wird erwärmtes Wasser eine Dampfkraftanlage im Kühlturm nach oben gepumpt und gelangt in beispielsweise kreuzförmig angeordnete Verteilerkanäle 6. Diese Kanäle besitzen Trennwände 7, so daß das im Schacht 4 nach oben gepumpte Wasser in parallele Rohre 8 gelangen kann, die es auf den Kühlturmquerschnitt verteilen. Aus den Rohren 8 tritt das zu kühlende Wasser aus und gelangt auf die schematisch bei 12 wiedergegebene Kühlturmeinheit, die das Wasser in Berührung mit der Luft bringen, so daß es im Gegenstrom zu der von dem Axiallüfter 2 in den Kühlturm gepreßten und nach oben strömenden Luft abregnet, bis es in das Becken 13 gelangt, der im unteren Bereich des Kühlturmes vorgesehen ist.

Im Normalbetrieb, d. h. bei im Plusbereich liegenden Außentemperaturen ist die beschriebene Wasserverteilungsanlage 4—8 so geschaltet, daß die Summe der Flächen 10 und 11 mit abregnendem Kühlwasser beaufschlagt ist. Sobald die Außentemperaturen in den Minusbereich absinken, besteht die Gefahr, daß auf die Oberfläche 14 des Sumpfes 13 aufprallendes Kühlwasser zu Spritzwasser im Bereich des Flügels 15 des Axiallüfters 2 dort zu Vereisungen führt. Vereisungen treten ebenfalls durch Teilrückströme der Luft im Ventilatorbereich auf, da dann Wasser aus der beregneten Zone 11 in den Ventilatorlaufring gelangt. Außerdem führt die Schwadenbildung im Bereich des Kühlturmes zu Kondenswasser am Flügel, insbesondere an der nicht dargestellten Nabe des Ventilators, die im Bereich der Achse 16 sitzt.

Um diese Erscheinungen zu vermeiden, werden Absperrorgane 5 so geschaltet, daß Kühlwasser lediglich durch die Rohre 8 in den Verteilerkanal gelangen kann, nicht aber durch die Rohre 8a, die die im Randbereich des Kühlturmes liegende Fläche 11 beregnen, weil sie von den dem äußeren Bereich des Kühlturmes zugeordneten Verteilerkanälen 6 abzweigen. Dadurch wird das Wasser nur über der schraffiert wiedergegebenen Fläche 10 abgeregnet, während die Randfläche 11 wasserfrei bleibt. Die Folge davon ist eine höhere Wasserdichte auf der Fläche 10 und eine Schwadenbildung in der wasserfreien Fläche 11, die jedoch infolge der Größe der Fläche 11 nicht bis an den Flügel der Lüfter 2 gelangen können, sondern nach oben abgeführt werden. Außerdem hört die Spritzwasserbildung unter der Fläche 11 auf, so daß auch auf diesem Wege kein Wasser an den Flügel der Lüfter gelangen kann, um dort Eis zu bilden.

Da man über die Absperrorgane 5 die Verteilung des Kühlwassers auf die Fläche 11 und/oder die Fläche 10 auch bei laufenden Ventilatoren 2 schalten kann, können wasserfreie Randflächen 11 bedarfsweise erzeugt werden, so daß sich u. a. der sogenannte By-pass-Betrieb ganz oder teilweise vermeiden läßt.

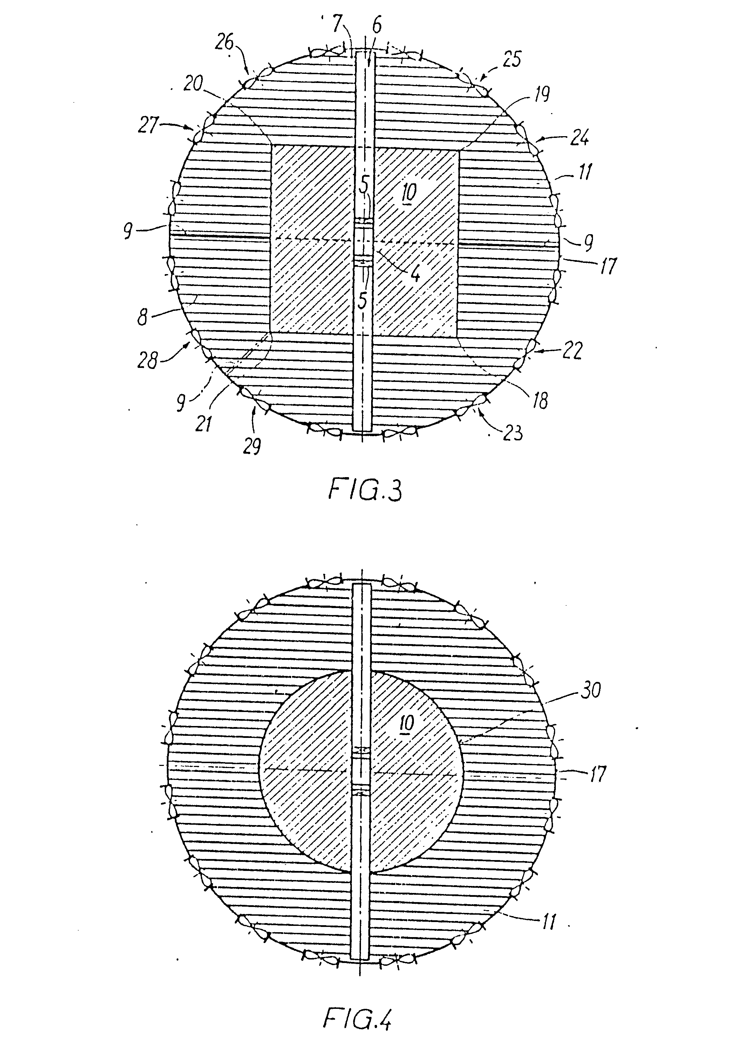

Gemäß dem Ausführungsbeispiel der Fig. 3 ist die bei Minustemperaturen mit dem zu kühlenden Wasser beaufschlagte Teilfläche 10 quadratisch, wobei auf dem Umfang des Kühlturmes 1 insgesamt sechzehn drückende Ventilatoren angeordnet sind, je vier Ventilatoren in einem Quadranten des Kühlturms. Die quadratische, mit Kühlwasser beaufschlagte Fläche 10 ist innerhalb der Gesamtfläche so angeordnet, daß die bei Minustemperaturen nicht mit Kühlwasser beaufschlagte Fläche 11 an der Umrißlinie 17 des horizontalen Querschnittes durch den Kühlturm begrenzt ist. Innerhalb der Querschnittsfläche ist die Teilfläche 10 so angeordnet, daß ihre Ecken 18—21 jeweils auf der Mitte zwischen zwei benachbarten Ventilatoren 22, 23; 24, 25; 26, 27; 28, 29 liegen. Dadurch ist die kürzeste Entfernung der wasserbeaufschlagten Fläche 10 von der Umrißlinie 17 nicht zwischen die Flügel der Ventilatoren, sondern die Kühlturmwand gelegt. Auf diese Weise ergeben sich trotz der quadratischen bzw. rechteckigen Form der beaufschlagten Fläche 10 möglichst große Abstände zu den Laufzeugen der Ventilatoren.

In der Fig. 3 ist ferner angedeutet, daß im Kühlturm radiale Trennwände 9 angeordnet werden können. Diese Trennwände können bis in den Sumpf 13 des Kühlturmes ragen und sorgen für eine Abtrennung der Randflächen voneinander.

Gemäß der Ausführungsform nach Fig. 4 ist die Umrißlinie 30 der bei Minustemperaturen mit dem Kühlwasser beaufschlagten Fläche 10 kreisförmig und liegt konzentrisch zum Umriß 17 des Kühlturmes.

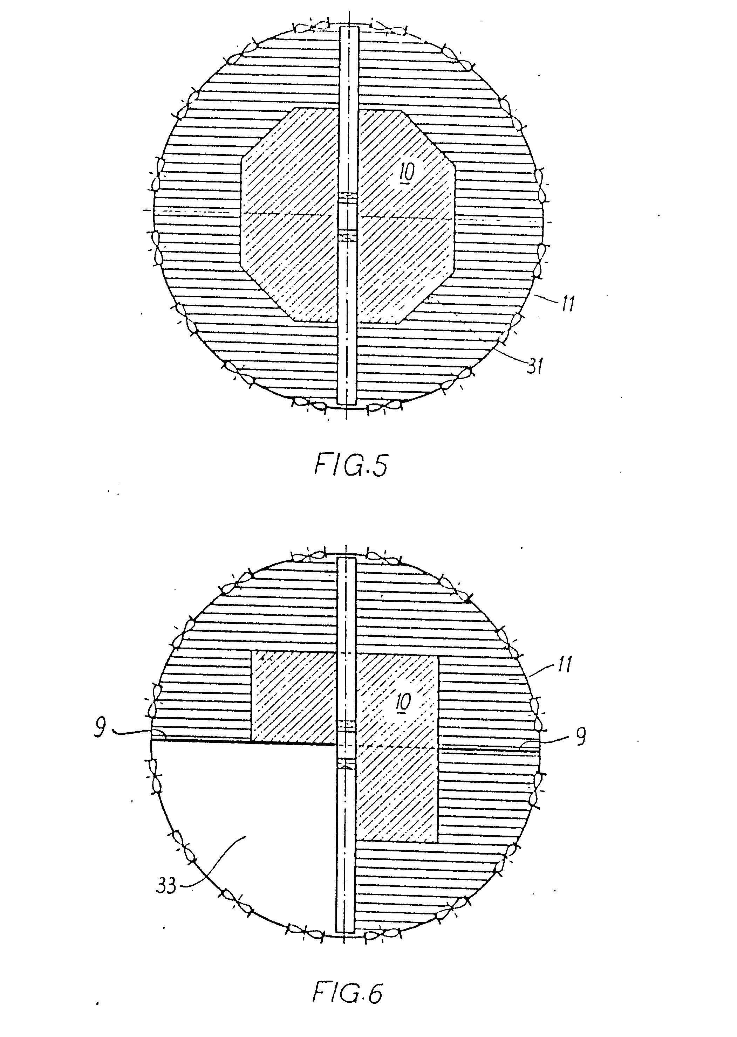

Beim Ausführungsbeispiel nach Fig. 5 ist dagegen die Umrißlinie 31 der mit dem Kühlwasser bei Minustemperaturen beaufschlagten Fläche 10 achteckig, wobei wiederum die Ecken auf die Kühlturmwand zwischen zwei benachbarten Ventilatoren wie bei der Ausführungsform nach Fig. 3 gerichtet sind.

Fig. 6 zeigt die Abschaltung eines Sektors 33, d. h. eines ganzen Quadranten des runden Kühlturmquerschnittes bei im übrigen quadratischer Ausbildung der beregneten Fläche 10 durch die beschriebenen Trennwände 9.

Obwohl in den Figuren zwangsbelüftete Kühltürme dargestellt sind, läßt sich die Erfindung auch auf Naturzugkühltürme, z. B. solche mit einer nach einem Paraboloid geformten Stahlbetonhaut anwenden.

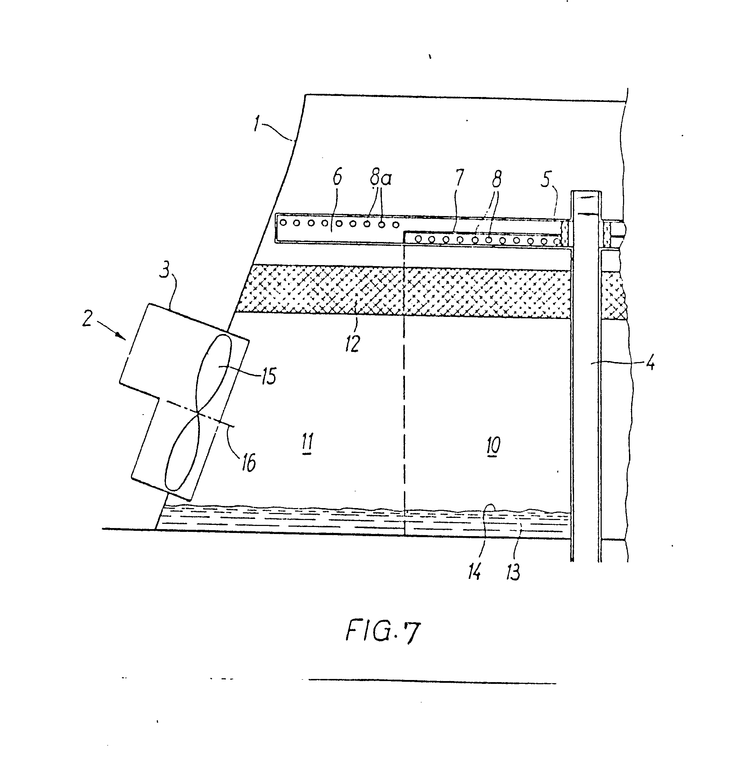

Während in den Fig. 1 und 2 eine Zellenausführung eines Kühlturms dargestellt und im vorstehenden eingehend erläutert wurde, zeigt die Fig. 7 einen Kühlturm in der bekannten Form eines Paraboloides mit einer Außenschale aus Stahlbeton. Zentral sind Steigeschächte 4 angeordnet, die das erwärmte Wasser einer Dampfkraftanlage nach oben führen, das dann in die Verteilerkanäle 6 läuft. Übereinstimmende Teile der Fig. 7 mit der Fig. 2 tragen gleiche Bezugszeichen.

**Patentansprüche**

1. Kühlturm zum Rückkühlen von Wasser, welcher mehrere, radial angeordnete Ventilatoren aufweist, welche die Außenluft ansaugen und in den Kühlturm drücken, in dem hinter den Ventilatoren über einer Querschnittsfläche, die von der Umrißlinie eines Horizontalquerschnittes durch den Kühlturm unter den Einbauten gebildet wird, das zu kühlende Wasser im Gegenstrom abgeregnet wird, welches über Steigeschächte (4) nach oben gepumpt und über Kanäle (6) und Rohre (8) auf die Einbauten verteilt wird, dadurch gekennzeichnet, daß in an sich bekannter Weise durch die Anordnung der Verteilerkanäle (6) und/oder die Anordnung von Absperrorganen (5) in den Verteilerkanälen (6) außen angeordnete Verteilerkanalquerschnitte (8a), welche eine von der Umrißlinie des Kühlturmquerschnittes ausgehende Randfläche (11) beaufschlagen, zu- und abschaltbar sind, und daß die bei abgeschalteten Verteilerkanalabschnitten frei von herunterregnendem Wasser gehaltene Randfläche (11) einem oder mehreren Ventilatoren (2; 22, 23; 24, 25; 26, 27; 28, 29) zugeordnet und so gewählt ist, daß das auf dem verbleibenden Kühlturmquerschnitt abregnende Wasser die der Randfläche zugeordneten Ventilatoren nicht erreicht.

2. Kühlturm nach Anspruch 1, dadurch gekennzeichnet, daß die mit dem Wasser beaufschlagte Teilfläche (10) eine quadratische bis rechteckige Umrißlinie aufweist, deren Mittelpunkt mit dem Mittelpunkt der Kühlturmquerschnittsfläche zusammenfällt.

3. Kühlturm nach Anspruch 1, dadurch gekennzeichnet, daß die mit dem Wasser beaufschlagte Teilfläche (10) eine Umrißlinie (31) aufweist, die der eines Vieleckes entspricht.

4. Kühlturm nach Anspruch 2, dadurch gekennzeichnet, daß die mit dem Wasser beaufschlagte Teilfläche (10) mit ihren Ecken (18—21) auf die Mitte zwischen benachbarten Ventilatoren (22, 23; 24, 25; 26, 27; 28, 29) zeigt.

5. Kühlturm nach einem der Ansprüche 1 bis 4, gekennzeichnet durch radiale Trennwände (9) zwischen benachbarten Randflächen (11), vorzugsweise durch Sektorflächen (33) des Kühlturmquerschnittes.

6. Kühlturm nach Anspruch 5, dadurch gekennzeichnet, daß die Trennwände (9) bis in ein Kühlwasserbecken (13) des Kühlturmes (1) reichen.

## Claims

1. A cooling tower for cooling water, which incorporates several radially disposed fans which draw in outside air and force it into the cooling tower, while behind the fans, above a cross-sectional area formed by the outline of a horizontal cross-section through the cooling tower underneath the installed fittings, the water to be cooled is sprayed downwardly in counterflow, the water being pumped upwards via ascending shafts (4) and being distributed to the fittings via ducts (6) and pipes (8), characterized in that, in a manner known per se, by means of the arrangement of distributor ducts (6) and/or the arrangement of valves (5) in the distributor ducts (6), externally disposed distributor duct cross-sections (8a), which act upon a peripheral surface (11) within the outline of the cooling tower cross-section, can be switches in and out, and that the peripheral surface (11), which is kept clear of water raining down when the distributor duct sections are switched out, is assigned to one or more fans (2; 22, 23; 24, 25; 26, 27; 28, 29); and is chosen in such a way that the water raining down on the remaining cooling tower cross-section does not reach the fans assigned to the peripheral surface.

2. A cooling tower according to claim 1, characterized in that the partial area (10) acted upon by the water has a quadrangular to rectangular outline whose centre point coincides with the centre point of the cooling tower cross-sectional area.

3. A cooling tower according to claim 1, characterized in that the partial area (10) acted upon by the water has an outline (31) corresponding to that of a polygon.

4. A cooling tower according to claim 2, characterized in that the partial area (10) acted upon by the water has its corners (18—21) pointing to midpoints between adjacent fans (22, 23; 24, 25; 26, 27; 28, 29).

5. A cooling tower according to one of claims 1 to 4, characterized by radial partitions (9) between adjacent peripheral surfaces (11), preferably through sector areas (33) of the cooling tower cross-section.

6. A cooling tower according to claim 5, characterized in that the partitions (9) extend into a cold water basin (13) of the cooling tower (1).

## Revendications

1. Tour de refroidissement, pour refroidir de l'eau, comportant un certain nombre de ventilateurs agencés radialement pour aspirer de l'air à l'extérieur et refouler un courant d'air à l'intérieur de la tour; celle-ci présentant, derrière les ventilateurs, une surface horizontale d'arrosage disposée en-dessous d'organes internes de ruissellement prévus à l'intérieur de la tour; cette surface d'arrosage étant délimitée par le contour de la section transversale correspondante de la tour, et celle-ci étant prévue pour être arrosée par l'eau à refroidir, qui est refoulée par pompage vers le haut dans des conduites montantes (4), pour passer de là dans des canaux (5) et dans des tubes de distribution (8) qui envoient l'eau sur des chicanes de ruissellement; la tour de refroidissement étant caractérisée en ce que, d'une manière connue, le circuit des canaux de distribution (6) comporte certaines parties (8a) disposées vers l'extérieur de la tour de refroidissement, et réalisées par un agencement approprié des canaux de distribution et/ou d'organes d'obturation associés (5), pour permettre à volonté d'assurer ou d'interrompre l'arrosage d'une surface de bordure (11), adjacente au contour extérieur de la section transversale de la tour de refroidissement; et en ce que la surface de bordure (11), dont on peut ainsi interrompre l'arrosage par temps froid, en coupant l'alimentation des parties correspondantes (8a) des canaux de distribution (6), est associée à un ou plusieurs ventilateurs (2; 22, 23; 24, 25; 26, 27; 28, 29); la disposition de ladite surface de bordure (11) étant choisie de telle manière que l'eau en pluie, qui tombe sur le reste (10) de la surface de la section transversale de la tour de refroidissement, ne puisse pas atteindre les ventilateurs associés à la surface de bordure précitée.

2. Tour de refroidissement selon la revendication 1, caractérisée en ce que la surface partielle (10) dont on maintient l'arrosage par temps froid présente un contour carré ou rectangulaire, dont le centre coïncide avec le centre de la section transversale de la tour de refroidissement.

3. Tour de refroidissement selon la revendication 1, caractérisée en ce que la surface partielle (10) dont on maintient l'arrosage présente un contour (31) de forme polygonale.

4. Tour de refroidissement selon la revendication 2, caractérisée en ce que les coins (18—21) de la surface partielle (10) dont on maintient l'arrosage sont orientés en direction du milieu de l'intervalle qui sépare deux ventilateurs adjacents (22, 23; 24, 25; 26, 27; 28, 29).

5. Tour de refroidissement selon l'une des revendications 1 à 4, caractérisée en ce qu'elle comporte des cloisons radiales de séparation (9), disposées entre des surfaces de bordure adjacentes (11), de préférence entre des surfaces correspondant à des secteurs circulaires (33) de la section transversale de la tour de refroidissement.

6. Tour de refroidissement selon la revendication 5, caractérisée en ce que les cloisons de séparation (9) s'étendent jusqu'à pénétrer dans un bac de récupération (13) disposé dans le bas de la tour de refroidissement (1) pour y recueillir l'eau tombée en pluie.

FIG.1

FIG.2

0 054 843

FIG.3

FIG.4

FIG.5

FIG.6

FIG. 7